(19) Europäisches Patentamt
European Patent Office
Office européen des brevets

(11) **EP 3 111 760 A1**

(12) **EUROPÄISCHE PATENTANMELDUNG**

(43) Veröffentlichungstag:
04.01.2017  Patentblatt 2017/01

(51) Int Cl.:
*A01M 7/00* (2006.01)

(21) Anmeldenummer: **16172610.4**

(22) Anmeldetag: **02.06.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **02.07.2015  DE 102015110696**

(71) Anmelder: **CarboFibretec GmbH**
**88046 Friedrichshafen (DE)**

(72) Erfinder:
• **Wissler, Erhard**
  **73266 Bissingen/Teck (DE)**
• **Thomas, Leschik**
  **88074 Meckenbeuren (DE)**
• **Helms, Olaf**
  **09116 Chemnitz (DE)**

(74) Vertreter: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(54) **FELDSPRITZE UND FELDSPRITZENARM IN MISCHBAUWEISE**

(57)    Die Erfindung betrifft einen Feldspritzenarm (1) zum Ausbringen einer ein Gut ausbringenden Leitung, mit mehreren, aneinander gelenkig angebrachten, klappbaren Segmenten (4, 5, 6, 7), von denen zumindest ein Segment (4, 6, 7) durch überwiegend auf Zug beanspruchte Längsholme (8) und mit diesen verbundenen überwiegend auf Druck und/oder Torsion beanspruchte Diagonalstreben (9) formbestimmt ist, wobei die Längsholme (8) aus Faserverbundwerkstoff ausgebildet sind und die Diagonalstreben (9) aus einer Leichtmetalllegierung ausgebildet sind. Die Erfindung betrifft auch eine Feldspritze mit einem solchen Feldspritzenarm (1) oder zwei solchen Feldspritzenarmen (1).

Fig. 1

**Beschreibung**

Die Erfindung betrifft einen Feldspritzenarm zum Anbringen einer Leitung, die vorbereitet ist ein Gut auszubringen, wobei solch ausbringbares Gut, Pflanzenschutzmittel, Dünger oder Saatgut sein kann, mit mehreren aneinander gelenkig angebrachten klappbaren Segmenten, von denen zumindest ein Segment durch überwiegend auf Zug beanspruchte Längsholme und mit diesen verbundenen, überwiegend auf Druck und/oder Torsion beanspruchten Diagonalstreben formbestimmt ist.

Solche Feldspritzenarme sind bereits aus dem Stand der Technik bekannt und werden üblicherweise aus Leichtmetalllegierungsbauteilen zusammengesetzt. Üblicherweise werden an einem Landfahrzeug, wie einem Zugfahrzeug oder einem selbstgetriebenen Fahrzeug zwei beiderseitig des Fahrzeugs abstehende Feldspritzenarme eingesetzt. Die Feldspritzenarme sind an das Fahrzeug heranklappbar, so dass die Gesamtbreite des Fahrzeugs klein genug ist, um auf üblichen Straßen zu fahren.

Es ist die Aufgabe der vorliegenden Erfindung Feldspritzenarme so zu verbessern, so dass das auszubringende Gut präziser ausgebracht werden kann. Es soll eine Verringerung eines Schwingens erreicht werden. Zusätzlich soll aber auch die Länge des Feldspritzenarms erhöht werden, so dass eine größere Fläche durch den Feldspritzenarm bestrichen werden kann. Im Besonderen soll das Gewicht von Feldspritzenarmen erheblich reduziert werden.

Diese Aufgabe wird bei einem gattungsgemäßen Feldspritzenarm erfindungsgemäß dadurch gelöst, dass die Längsholme aus Faserverbundwerkstoff ausgebildet sind und die Diagonalstreben aus einer Leichtmetalllegierung ausgebildet sind.

Es wird somit eine nahezu ideale Konstruktion zum Aufnehmen von Feldspritzenleitungen zur Verfügung gestellt. Insbesondere eine Pflanzschutzleitung ist daran anbringbar und die Segmente selber klappbar ausgestaltet, so dass der Feldspritzenarm einklappbar ist. Eine hier vorgestellte spezielle Hybridbauweise stellt einen optimalen Kompromiss zwischen Leichtbau und Kosteneffizienz dar.

Faserverbundwerkstoffe und andere Leichtbauwerkstoffe werden dabei besonders clever kombiniert. Ein solcher Feldspritzenarm kann auch dadurch hergestellt werden, dass Längsholme, die vor allem Zugkräfte aufnehmen, aus Kohlefasern oder einem anderen geeigneten Faserverbundwerkstoff hergestellt werden. Die Diagonalstreben oder alternative Schubfelder, die überwiegend Druck- oder Torsionskräfte aufnehmen müssen, werden aus metallischem Leichtbauwerkstoff, insbesondere Aluminiumlegierungen oder anderen Leichtbauwerkstoffen oder in Mischbauweisen, etwa Aluminium-Faserverbundmischbauteilen, hergestellt.

Das Fügen der einzelnen Komponenten kann dabei lösbar, etwa durch den Einsatz von Schrauben oder Nieten, oder auch nicht lösbar ausgestaltet werden. Bei den nicht lösbaren Varianten haben sich Klebelösungen, ein Laserschweißen oder die Kombination von Kleben mit Nieten oder Schrauben bewährt.

Diese Lösungen stellen die den reinen Bauweisen nur aus Faserverbundwerkstoffen oder nur aus Metallwerkstoffen, eine materialspezifischere und sinnvolere Bauweise dar, so dass bei dieser Ausführung die Eigenschaften der einzelnen Materialien besser ausgenutzt werden. Speziell in Ländern mit hohen Importzöllen oder großen Entfernungen ist diese Bauweise von enormen Vorteil, weil Aluminiumbaugruppen / Leichtmetallbaugruppen vor Ort einfacher beschaffbar sind.

Vorteilhafte Ausführungsformen sind in den Unteransprüchen beansprucht und werden nachfolgend näher erläutert.

So ist es von Vorteil, wenn das Segment einen mit einigen (oder allen) der Längsholme und/oder einigen (oder allen) der Diagonalstreben verbundenen Boden aufweist, der vorzugsweise in etwa vorbestimmten Abständen Perforationen, wie bspw. kreisrunde Durchgangslöcher besitzt, wobei am Boden eine Fluid- oder Schüttgutleitung angebracht ist / anbringbar ist, etwa derart, dass durch die Perforationen Gut, wie Pflanzenschutzmittel, Dünger oder Saatgut ausbringbar ist. Bei einer solchen Ausgestaltung kann eine kompakte Bauweise realisiert werden.

Für die Montage ist es von Vorteil, wenn die Längsholme und/oder die Diagonalstreben hohl ausgestaltet sind, etwa nach Art von offenen oder geschlossenen Hohlzylindern. Das Gesamtgewicht wird dadurch auch wirkungsvoll reduziert.

Ferner ist es von Vorteil, wenn der Feldspritzenarm ein distales Segment aus einem oder mehreren faserverbundwerkstofflichen Flächenbauteilen aufweist. Als Segment wird jener Feldspritzenarm zwischen (genau) zwei Gelenken verstanden. Auf Längsholme und/oder Diagonalstreben kann dann verzichtet werden und ein im Wesentlichen nur aus Faserverbundwerkstoff gefertigtes Bauteil mit geschlossenem Querschnitt eingesetzt werden. Die Stabilität wird dadurch erhöht, das Gewicht reduziert und die Steifigkeit verbessert. Insbesondere wird das Gewicht an jener Stelle reduziert, an der es die größte Hebelwirkung aufweist.

Es ist zweckmäßig, wenn das distale Segment drei Flächenbauteile aufweist, die einstückig oder form-, kraft- und/oder stoffschlüssig miteinander verbunden sind. Gerade eine dreidimensionale symmetrische Ausgestaltung, vorzugsweise eine gleichschenklige oder gleichseitige Ausgestaltung, ist fertigungstechnisch optimal und weist besonders gute Stabilitätswerte auf.

Um ein effizientes Ausbringen von Gut zu ermöglichen, ist es von Vorteil, wenn an der Innenseite oder an der Außenseite eines im Wesentlichen in der Betriebsstellung horizontal ausgerichteten Flächenbauteils, die Fluid- und/oder Schüttgutleitung angebracht ist. Ein einfaches Reinigen und Reparieren kann dann durchgeführt werden.

Auch ist es von Vorteil, wenn die zwei Segmente bspw. im Bereich der Gelenke über wenigstens einen im Betätigungsfall / im Transportbetrieb ein Verklappen / Zusammenklappen hervorrufender Aktor, wie einen Hydraulikzylinder, einen Pneumatikzylinder oder einen Elektromotor, verbunden sind. Ein nach dem Betrieb gewünschtes Einklappen kann dann vom Führer des Fahrzeuges einfach aber zielgerichtet hervorgerufen werden.

Wenn der Aktor ein Gelenk zwischen zwei Segmenten überbrückt, ist eine zielgerichtete Kinematik einsetzbar.

Ferner ist es von Vorteil, wenn 2, 3, 4 oder mehrere Aktoren, wie Hydraulikzylinder zwischen zwei Segmenten eingebunden sind. Die Ausfallsicherheit wird erhöht und die Art der Bewegung der Segmente aufeinander zu feiner abstimmbar.

Es ist auch von Vorteil, wenn der Aktor, etwa der Hydraulikzylinder an einem Längsholm des einen Segments und einem Längsholm oder einem Flächenbauteil eines anderen Segments kraftübertragend angebracht ist. Bei einer entsprechenden Anbindung können die einzelnen Segmente platzsparend aufeinander zugeklappt werden. Auch ein Ausklappen kann dann einfach bewirkt werden.

Es ist auch von Vorteil, wenn die Längsholme und Diagonalstreben einen im Querschnitt vorzugsweise dreieckigen, durchgängigen Tunnel definieren. Das Gesamtgewicht bleibt dann reduziert, der Zugang zu der Fluid- oder Schüttgutleitung gewährleistet und die Wartung wird vereinfacht.

Für die Stabilität ist es zuträglich, wenn die Längsholme und Diagonalstreben nach Art eines Fachwerks oder Stabwerks aufgebaut / angeordnet sind.

Es ist auch von Vorteil, wenn an den Längskanten des Segments jeweils ein Längsholm vorhanden ist.

Ein vorteilhaftes Ausführungsbeispiel ist auch dadurch gekennzeichnet, dass ein Längsholm eine von drei Ecken des Querschnittprofils des Segments bestimmt / festgelegt / definiert.

Wenn die Längsholme und Diagonalstreben miteinander und/oder untereinander lösbar, etwa durch Verschraubung oder Vernietung verbunden sind, so kann eine einfache Demontage durchgeführt werden. Es ist aber auch von Vorteil, wenn die Längsholme und Diagonalstreben miteinander und/oder untereinander unlösbar, etwa über Laser-Schweißungen und/ oder Klebungen miteinander verbunden sind. Diebstahl wird dann erschwert und ungewollte Demontage verhindert.

In einer Variante hat es sich als vorteilhaft herausgestellt, wenn an wenigstens einer der Diagonalstreben eine Schelle oder Spinne angebunden ist, mittels derer eine feste Verbindung zu wenigstens einem der Längsholme erreicht ist. Das Aneinanderbefestigen der Einzelbauteile wird dann effizient möglich.

Die Stabilität erhöht sich, wenn die Schelle oder Spinne mit je einem Längsholm und mehreren Diagonalstreben, vorzugsweise 2, 3, 4, 5, 6 oder mehr Diagonalstreben verbunden ist.

Besonders zweckmäßig ist es, wenn die Diagonalstreben als z-förmige Versteifungsstreben wirkend angeordnet sind.

Damit auch durch die Schelle oder Spinne nicht unnötig das Gewicht hochgetrieben wird, ist es von Vorteil, wenn die Schelle oder die Spinne aus Metall, aus Stabilitätsgründen bspw. Stahl oder aus Leichtigkeitsgründen bspw. eine Leichtmetalllegierung, etwa einer Aluminiumlegierung, oder einem Faserverbundwerkstoff, etwa Glasfaser, Kohlenstofffasern und/oder Aramidfasern umfassendem Kunststoff-Verbundwerkstoff aufgebaut ist.

Damit eine gute Verbindung der Einzelteile erreicht werden kann, ist es von Vorteil, wenn die Schelle am Längsholm kraft-, form- und/oder stoffschlüssig, vorzugsweise reibschlüssig, befestigt ist und/oder an einer der Diagonalstreben kraft-, form- und/oder stoffschlüssig befestigt ist, vorzugsweise angeschraubt oder angenietet ist.

Auch ist es von Vorteil, wenn am distalen Segment weder Längsholme noch Diagonalstreben vorhanden sind. In den zwei oder mehr fahrzeuginneren Segmenten, sind jedoch solche Längsholme und Diagonalstreben gewünscht.

Auch ist es möglich, dass mehr als nur ein Segment ohne Längsholme und Diagonalstreben auskommt, und stattdessen nur auf faserverbundwerkstoffliche Flächenbauteile setzt.

Wenn die Längsholme als steife Balkenelemente ausgebildet sind, wird die Verbindung reduziert. Auch die Verbiegung reduziert sich. Damit das Gewicht gering gehalten werden kann, ist es von Vorteil, wenn die Längsholme (Kunst-Harz), und Verstärkungsfasern, wie Glasfasern, Kohlefasern und/oder Aramidfasern enthalten.

So ist es von Vorteil, wenn die Diagonalstreben aus einer Aluminiumlegierung gefertigt sind.

Die Erfindung betrifft auch eine Feldspritze, wie ein Landfahrzeug, etwa einen Traktor, mit einem Feldspritzenarm oder zwei Feldspritzenarmen der erfindungsgemäßen Art.

Die Erfindung wird nachfolgend mit Hilfe einer Zeichnung nähererläutert.

Fig. 1      eine perspektivische Darstellung eines aus drei Segmenten aufgebauten Feldspritzenarms,

Fig. 2      eine Seitenansicht auf den Feldspritzenarm entlang der Längsachse von diesem,

Fig. 3      eine perspektivische Teilansicht eines mittleren Segments und der dazu benachbarten teilweise dargestellten benachbarten Segmente,

Fig. 4      eine Vergrößerung des Bereichs IV aus Fig. 3,

Fig. 5      eine perspektivische Darstellung ähnlich zur Fig. 1,

Fig. 6     eine Vergrößerung des Bereichs VI aus Fig. 5 mit einer Koppelung der Einzelbauteile an Knoten mittels Schellen / Spinnen anstelle von mechanischen Verbindungselementen,

Fig. 7     eine Vergrößerung des Bereichs VII aus Fig. 5, zur Vereinfachung der Hydraulikkomponenten an Segmentübergängen mittels Spinnen und steifen Balkenelementen in perspektivischer Darstellung,

Fig. 8     eine schematische Darstellung der Belastungen am Feldspritzgestänge des Feldspritzenarms über die Länge des Feldspritzenarms aufgetragen,

Fig. 9     eine Darstellung eines Koppelbereichs von Diagonalstreben mit Längsholmen,

Fig. 10     eine Vergrößerung des Bereiches X aus Fig. 9.

Die Figuren sind lediglich schematischer Natur und dienen nur dem Verständnis der Erfindung. Die gleichen Elemente sind mit denselben Bezugszeichen versehen.

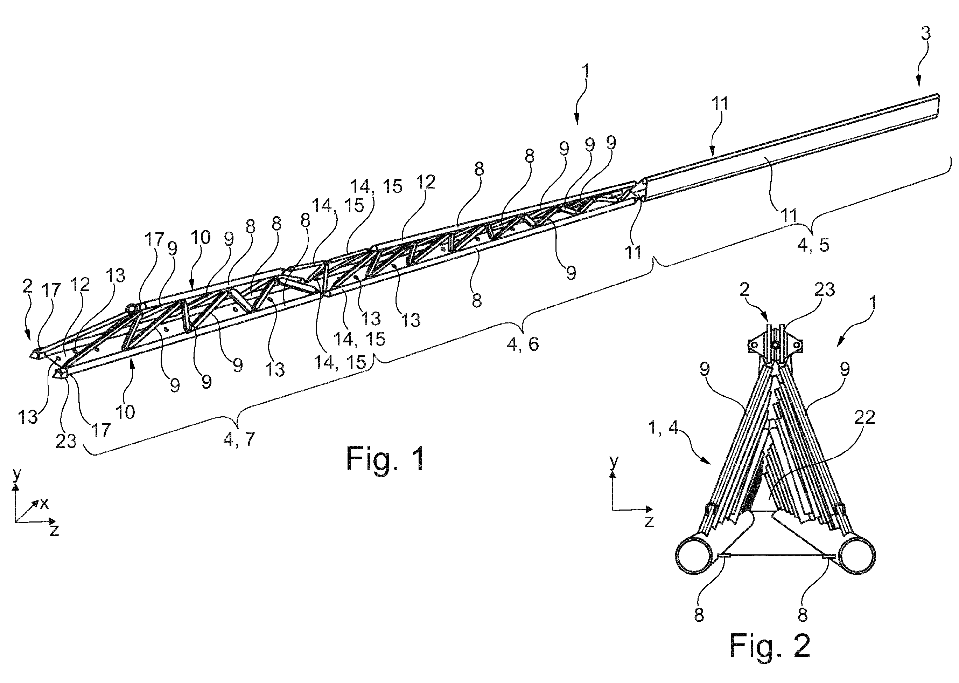

In Fig. 1 ist eine erste Ausführungsform eines erfindungsgemäßen Feldspritzenarms 1 dargestellt. Der Feldspritzenarm 1 kann auch als Feldspritzenarmgestänge bezeichnet werden bzw. wird durch ein solches Gestänge zumindest teilweise ausgebildet. Der Feldspritzenarm 1 ist zum Befestigen an einem Fahrzeug vorbereitet. Der Feldspritzenarm 1 weist dazu ein proximales Ende 2 auf. Ein distales Ende 3 hingegen verbleibt frei. Das proximale Ende 2 ist also an bspw. an einem Traktor oder einer Feldspritze angebunden. Dieses Landfahrzeug ist jedoch nicht dargestellt.

Der Feldspritzenarm ist zum Aufnehmen bzw. Befestigen einer Leitung, nämlich einer Fluid- und/oder Schüttgutleitung vorgesehen, die aber ebenfalls nicht dargestellt ist.

Der Feldspritzenarm 1 weist im vorliegenden Ausführungsbeispiel 3 Segmente 4 auf. Dabei gibt es ein distales Segment 5, ein mittleres Segment 6 und ein proximales Segment 7.

Das mittlere Segment 6 und das proximale Segment 7 weisen jeweils drei Längsholme 8 auf. Die drei Längsholme 8 eines der Segmente 6 oder 7 sind über mehrere Diagonalstreben 9 miteinander verbunden. Beispielsweise ist der oberste, vertikal höchste Längsholm 8 über drei Diagonalstreben mit den beiden vertikal niedrigeren Längsholmen 8 verbunden. An einem Knoten 10 ist ein untenliegender Längsholme 8 jedoch mit nur zwei Diagonalstreben 9 mit dem obenliegenden Längsholm verbunden. Letztlich bildet sich ein Fachwerk oder Stabwerk aus.

Die Längsholme 8 sind aus Faserverbundwerkstoff, insbesondere kohlefaserverstärktem Kunststoff hergestellt, wohingegen die Diagonalstreben 9 aus Aluminium gefertigt sind.

Während sich der Aufbau des mittleren Segments 6 und des proximalen Segments 7 ähneln, ist der Aufbau des distalen Segments 5 völlig anders, da er ohne Diagonalstreben 9 auskommt, und in einer speziellen Ausführungsform auch ohne Längsholme 8 auskommt. Er setzt jedoch mehrere Flächenbauteile 11 ein, also solche Bauteile, die eine geschlossene Fläche bestimmen. Es werden insbesondere drei Flächenbauteile 11 eingesetzt, die entweder miteinander verbunden sind, oder einteilig / einstückig ausgebildet sind.

Das mittlere Segment 6 und das proximale Segment 7 weisen auch einen plattenartigen Boden 12 auf, der Perforationen 13 aufweist. Die Perforationen 13 sind als kreisrunde Löcher, insbesondere Durchgangslöcher ausgebildet. Die nicht dargestellte Fluid- und/oder Schüttgutleitung wird dabei so angebracht, dass durch die Perforationen jenes durch die Leitung herangebrachte Gut druck- und schwerkraftbedingt ausbringbar ist.

Ein im Wesentlichen horizontal ausgerichtetes Flächenbauteil 11 im distalen Segment 5, weist auch Perforationen 13 auf, damit auch dort ein Ausbringen von Gut aus der Leitung möglich ist.

Die Längsholme 8 und Diagonalstreben 9 weisen eine gleichbleibende Dicke auf. Die Dicke der Längsholme 8 ist gleich groß oder um den Faktor 0,75 größer oder kleiner als die Wanddicke der Diagonalstreben 9.

Während die Längsholme 8 überwiegend noch zugbeansprucht werden, werden die Diagonalstreben 9 überwiegend auf Druck und/oder Torsion beansprucht.

Es sind einige Hydraulikbauteile 14, wie Hydraulikzylinder 15 im Bereich von Gelenken 16, wie Drehgelenken, vorhanden. An den Enden der Längsholme 8 sind Schellen oder Spinnen 17 vorhanden, mittels derer die Diagonalstreben 9 mit den Längsholmen 8 verbunden sind.

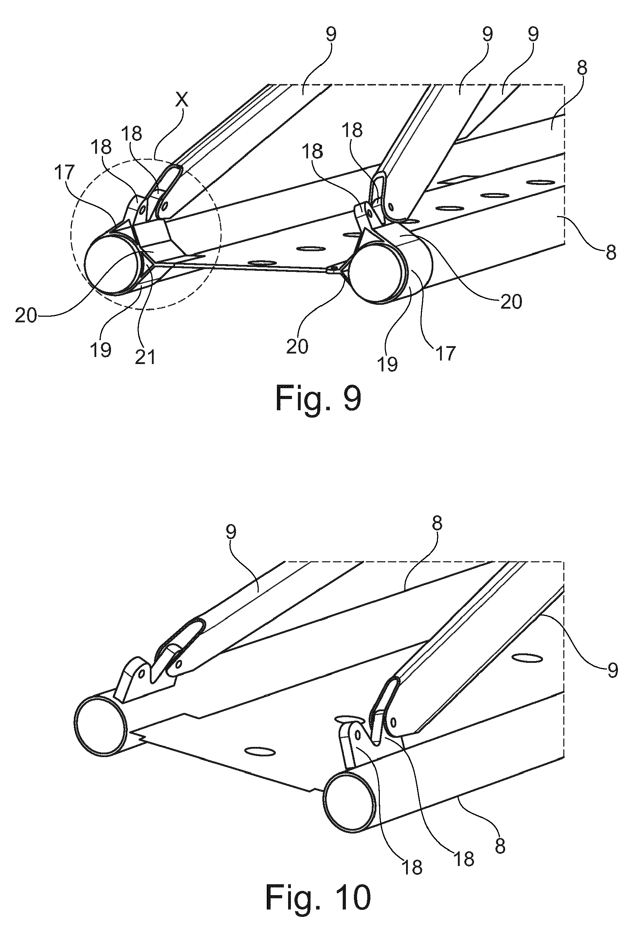

Die Schellen 17 umgeben dabei teilkreisartig die Längsholme 8, sind jedoch mit einem flachen Flanschabschnitt 18 (besser in den Fign. 9 und 10 zu erkennen), an den Diagonalstreben 9 angebunden. Die Schellen / Spinnen 17 sind aus Metall, bspw. einer Aluminiumlegierung gefertigt. Die Schellen oder Spinnen 17 weisen außerhalb eines abschnittsweise kreisartigen Hülsenabschnitts 19 hohle, eine spitz zulaufende Außenkontur aufweisende Vorsprungserweiterungen 20 auf. Jede Vorsprungserweiterung 20 ist hohl. Zwischen der Spitze der Vorsprungserweiterung 20 und dem Hülsenabschnitt 19 ist somit ein Hohlraum 21 vorhanden.

In Fig. 2 ist das Ausbilden eines durchgehenden Tunnels 22 durch die Diagonalstreben 9 und die Längsholme 8 ersichtlich, genauso wie das Vorhandensein eines Koppelbauteils 23 zum Anbringen des proximalen Endes 2 des proximalen Segments 4 des Feldspritzenarms 1 an dem Landfahrzeug.

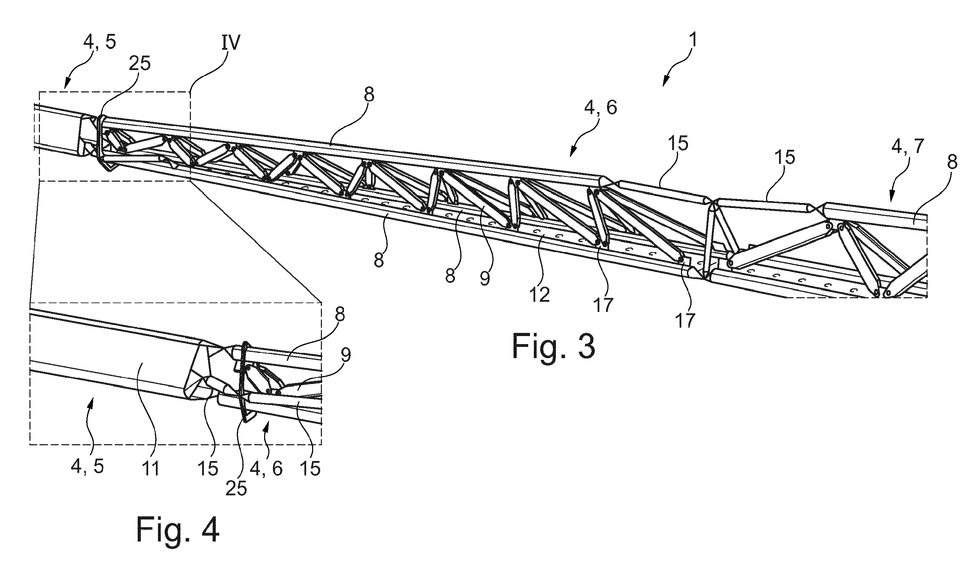

Wie in den Fign. 3 und 4 gut zu erkennen, ist auch ein Umschwenkbügel 25 eingesetzt. Die Hydraulikzylinder 15 stehen damit in Wirkzusammenhang mit wenigstens einem Umschwenkbügel 25. Die Längsholme 8 sind aus CFK gefertigt. Der Boden 12 und die als Schellen / Spinnen 17 ausgebildeten Anbindungselemente sind aus Aluminium gefertigt. Genauso sind auch die Diagonalstreben 9 aus Aluminium herstellbar, aber auch alternativ oder kombinatorisch aus Faserverbundwerkstoff, wie CFK oder anderen geeigneten faseraufweisenden Kunststoff-Konglomeraten.

Das distale Segment 5 ist vollständig aus CFK gefertigt und weist keine Versteifungsstreben auf.

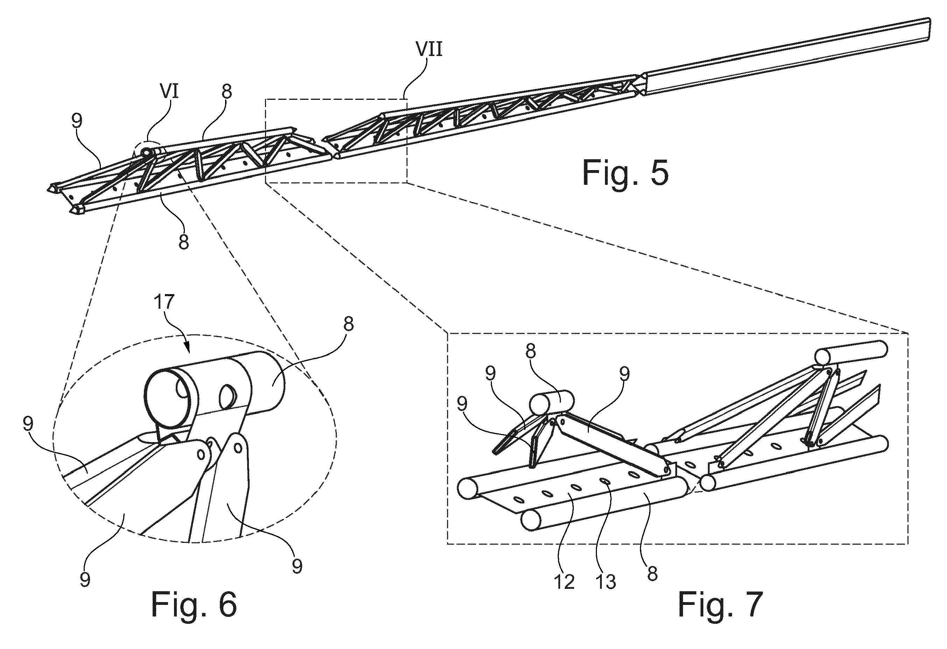

In den Fign. 5, 6 und 7 sind die Schellen 17 näher dargestellt. Die Schellen 17 können auch als Rigid-Spinnen bezeichnet werden. Eine Vereinfachung der Hydraulikkomponenten an einem Segmentübergang mittels solcher Spinnen 17 und steifen Balkenelemente ist gewünscht. Eine Koppelung der Knoten 10 mittels Spinnen 17 anstelle von mechanischen Verbindungselementen hat große Vorteile. In den Darstellungen der Fign. 5 bis 7 fehlen die Hydraulikbauteile 14, obwohl diese vorhanden sind.

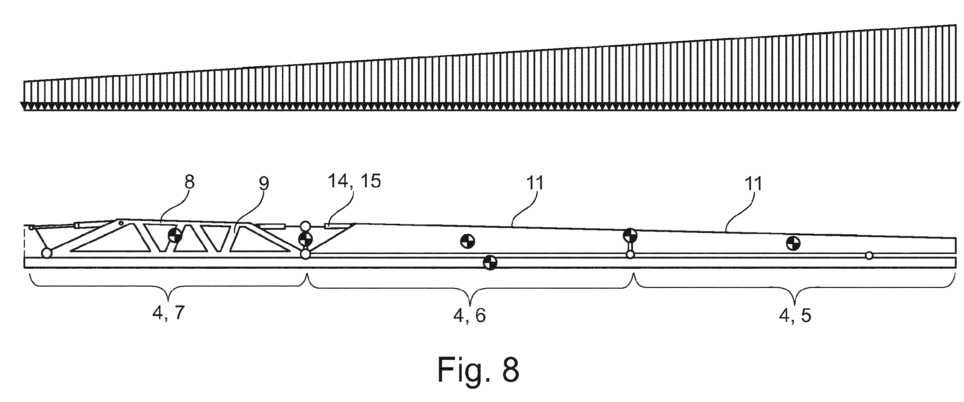

In Fig. 8 ist die Belastung am Feldspritzgestänge dargestellt, wobei für die VertikalBeschleunigung av folgender Zusammenhang gilt:

$$a_v = a_{v\,\text{max}} - \frac{x}{l_{gesamt}} (a_{v\,\text{max}} - a_{v\,\text{min}})$$

In dem hier dargestellten Beispiel, werden zwei äußere, nur Flächenbauteile 11 einsetzende Segmente 4 verwendet und nur das innerste Segment 7 ist als Stabwerk ausgebildet.

In den Fign. 9 und 10 werden die beiden Anbindungskomponenten an einer Stelle von zwei Längsholmen 8 näher dargestellt. Eine Geometrievereinfachung bei einer Bauteilvernetzung ist festzustellen, was zu einer Verringerung der vorliegenden Komponentenmasse führt. Die Berücksichtigung der differierenden Massen mittels Massenelemente für rigid-Spinnen 17 für jede Anbindungskomponente war von Vorteil. In einem Segment A wurde ein Anwendungssegment mit nur 275 g erreicht, wohingegen sogar in einem Segment B ein unteres Anbindungselement nur 142 g wog. Anbindungselement und oberer Holm glichen sich aus.

Es hat sich bewährt, wenn im proximalen Segment die Diagonalstreben eine Wanddicke aufweisen, die zwischen 120% und 180% der (Blech-)Dicke des Bodens beträgt und die Längsholme eine Wanddicke aufweisen, die zwischen 180% und 220%, beispielsweise 200% der (Blech-)Dicke des Bodens beträgt. Ferner ist es von Vorteil, wenn der Boden im mittleren Segment die gleiche Dicke hat, wie der Boden im proximalen Segment. Allerdings soll die Wandstärke des nur aus Flächenbauteilen aufgebauten distalen Bauteils ca. 30% größer als die Bodendicke sein und/oder der Dicke einer Diagonalstrebe, etwa einer Diagonalstrebe des mittleren Segments entsprechen.

Die Faserausrichtung soll entsprechend der zu erwartenden Zug-, Druck- und Torsionsbelastung gewählt werden.

Bezugszeichenliste

| | |
|---|---|
| 1 | Feldspritzenarm |
| 2 | proximales Ende |
| 3 | distales Ende |
| 4 | Segment |
| 5 | distales Segment |
| 6 | mittleres Segment |
| 7 | proximales Segment |
| 8 | Längsholm |
| 9 | Diagonalstrebe |
| 10 | Knoten |
| 11 | Flächenbauteil |
| 12 | Boden |
| 13 | Perforation |
| 14 | Hydraulikbauteil |
| 15 | Hydraulikzylinder |
| 16 | Gelenk |
| 17 | Schelle / Spinne |
| 18 | Flanschabschnitt |
| 19 | Hülsenabschnitt |
| 20 | Vorsprungserweiterung |
| 21 | Hohlraum |
| 22 | Tunnel |
| 23 | Koppelbauteil |
| 24 | Umschwenkbügel |

**Patentansprüche**

1. Feldspritzenarm (1) zum Ausbringen einer ein Gut ausbringenden Leitung, mit mehreren, aneinander gelenkig angebrachten, klappbaren Segmenten (4, 5, 6, 7), von denen zumindest ein Segment (4, 6, 7) durch überwiegend auf Zug beanspruchte Längsholme (8) und mit diesen verbundenen überwiegend auf Druck und/oder Torsion beanspruchte Diagonalstreben (9) formbestimmt ist, **dadurch gekennzeichnet, dass** die Längsholme (8) aus Faserverbundwerkstoff ausgebildet sind und die Diagonalstreben (9) aus einer Leichtmetalllegierung ausgebildet sind.

2. Feldspritzenarm (1) nach Anspruch 1, **dadurch gekennzeichnet, dass** das Segment (4, 6, 7) einen mit einigen der Längsholme (8) und/oder einigen der Diagonalstreben (9) verbundenen Boden (12) aufweist.

3. Feldspritzenarm (1) nach einem der Ansprüche 1 oder 2, **dadurch gekennzeichnet, dass** die Längsholme (8) und/oder die Diagonalstreben (9) hohl ausgestaltet sind.

4. Feldspritzenarm (1) nach einem der Ansprüche 1 bis 3, **dadurch gekennzeichnet, dass** der Feldspritzenarm (1) ein distales Segment (4, 5) aus einem oder mehreren faserverbundwerkstofflichen Flächenbauteilen (11) aufweist.

5. Feldspritzenarm (1) nach Anspruch 4, **dadurch gekennzeichnet, dass** das distale Segment (5) drei flächenbauteile 11 aufweist, die einstückig oder form-, kraft- und/oder stoffschlüssig miteinander verbunden sind.

6. Feldspritzenarm (1) nach Anspruch 4 oder 5, **dadurch gekennzeichnet, dass** an der Innenseite oder an der Außenseite eines in der Betriebsstellung horizontal ausgerichteten Flächenbauteils (11), eine Fluid- und/oder Schüttgutleitung angebracht ist.

7. Feldspritzenarm (1) nach einem der Ansprüche 1 bis 6, **dadurch gekennzeichnet, dass** je zwei Segmente (4, 5, 6, 7) über wenigstens einen im Betätigungsfall ein Verklappen hervorrufender Aktor verbunden sind.

8. Feldspritzenarm (1) nach Anspruch 7, **dadurch gekennzeichnet, dass** der Aktor an einem Längsholm (8) des einen Segments (4, 5, 6, 7) und einem Längsholm (8) oder einem Flächenbauteil (11) eines anderen Segments (4, 5, 6, 7) kraftübertragend angebracht ist.

9. Feldspritzenarm (1) nach einem der Ansprüche 1 bis 8 **dadurch gekennzeichnet, dass** die Längsholme (8) und Diagonalstreben (9) einen durchgängigen Tunnel (22) definieren.

10. Feldspritze mit einem Feldspritzenarm (1) oder zwei Feldspritzenarmen (1) nach einem der Ansprüche 1 bis 9.

Fig. 1

Fig. 2

Fig. 3

Fig. 4

EP 3 111 760 A1

Fig. 5

Fig. 6

Fig. 7

Fig. 8

Fig. 9

Fig. 10

**EUROPÄISCHER RECHERCHENBERICHT**

Nummer der Anmeldung

EP 16 17 2610

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 567 616 A1 (DEERE & CO [US]) 13. März 2013 (2013-03-13) * Spalte 2, Absatz 7 - Spalte 4, Absatz 16; Abbildungen * ----- | 1-10 | INV. A01M7/00 |
| X | EP 0 191 637 A2 (ALLMAN & CO LTD [GB]) 20. August 1986 (1986-08-20) * Seite 2, Zeile 2 - Seite 3, Zeile 20 * * Seite 5, Zeile 18 - Seite 9, Zeile 22 * * Seite 10, Zeilen 10-12; Abbildung 9a * ----- | 1-10 | |
| A | WO 2013/092272 A1 (AGCO NETHERLANDS BV [NL]) 27. Juni 2013 (2013-06-27) * Seite 2, Absatz 7 - Seite 3, Absatz 3 * * Seite 4, Absätze 4,5 * * Seite 7, Zeilen 2,4 * * Seite 8, Absätze 5,7; Abbildungen * ----- | 1-10 | |
| A | US 2012/273590 A1 (HONERMANN JOHN PAUL [US] ET AL) 1. November 2012 (2012-11-01) * Seite 1, Absatz 16 * * Seite 2, Absatz 21-23 * * Seite 3, Absatz 25; Abbildungen 2,4 * ----- | 1-10 | RECHERCHIERTE SACHGEBIETE (IPC) A01M |

Der vorliegende Recherchenbericht wurde für alle Patentansprüche erstellt

| Recherchenort | Abschlußdatum der Recherche | Prüfer |
|---|---|---|
| München | 18. November 2016 | Schlichting, N |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 16 17 2610

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2016

| Im Recherchenbericht angeführtes Patentdokument | Datum der Veröffentlichung | Mitglied(er) der Patentfamilie | Datum der Veröffentlichung |
|---|---|---|---|
| EP 2567616 A1 | 13-03-2013 | AR 087770 A1<br>AU 2012216674 A1<br>BR 102012022674 A2<br>CA 2787904 A1<br>CN 102986632 A<br>EP 2567616 A1<br>US 2013062432 A1<br>US 2014231543 A1<br>US 2016115692 A1 | 16-04-2014<br>28-03-2013<br>29-10-2013<br>09-03-2013<br>27-03-2013<br>13-03-2013<br>14-03-2013<br>21-08-2014<br>28-04-2016 |
| EP 0191637 A2 | 20-08-1986 | AU 585581 B2<br>AU 5342486 A<br>EP 0191637 A2<br>ES 8705187 A1<br>US 4711398 A | 22-06-1989<br>21-08-1986<br>20-08-1986<br>16-07-1987<br>08-12-1987 |
| WO 2013092272 A1 | 27-06-2013 | KEINE | |
| US 2012273590 A1 | 01-11-2012 | CA 2757090 A1<br>US 2012273590 A1<br>US 2015122911 A1 | 29-10-2012<br>01-11-2012<br>07-05-2015 |

EPO FORM P0461

Für nähere Einzelheiten zu diesem Anhang : siehe Amtsblatt des Europäischen Patentamts, Nr.12/82